(19) Europäisches Patentamt
European Patent Office
Office européen des brevets

(11) Veröffentlichungsnummer: **0 300 970**
**A1**

# (12) EUROPÄISCHE PATENTANMELDUNG

(21) Anmeldenummer: **88810486.6**

(22) Anmeldetag: **15.07.88**

(51) Int. Cl.[4]: **C 08 G 65/40**

(30) Priorität: **24.07.87 CH 2826/87**

(43) Veröffentlichungstag der Anmeldung:
**25.01.89 Patentblatt 89/04**

(84) Benannte Vertragsstaaten:
**CH DE ES FR GB IT LI NL SE**

(71) Anmelder: **CIBA-GEIGY AG**
**Klybeckstrasse 141**
**CH-4002 Basel (CH)**

(72) Erfinder: **Eldin, Sameer H., Dr.**
**Route de Schiffenen 10**
**CH-1700 Fribourg (CH)**

**Grieshaber, Peter**
**Morgesuna**
**CH-1711 Zumholz (CH)**

## (54) Vernetzbare Polyätheramide.

(57) Polyätheramide mit einer spezifischen Viskosität von 0,25 bis 2,5, gemessen bei 30°C an einer 2%igen Lösung in Dimethylformamid, enthaltend, bezogen auf die Gesamtmenge der im Polyätheramid wiederkehrenden Strukturelemente, 100 bis 10 Mol% des wiederkehrenden Strukturelementes der Formel I

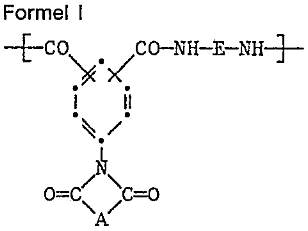

(I)

und 90 bis 0 Mol% des wiederkehrenden Strukturelementes der Formel II

$$-[-CO-A_1-CO-NH-E-NH-]- \quad (II),$$

worin A einen Rest der Formel 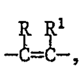, 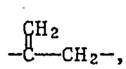,

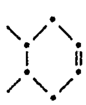, 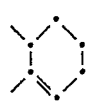, 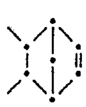 oder 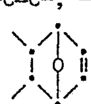 bedeutet,

wobei R und $R^1$ unabhängig voneinander je ein Wasserstoff-, Chlor-, Bromatom oder Methyl bedeuten, $A_1$ für einen aliphatischen, cycloaliphatischen, aromatischen oder heterocyclisch-aromatischen Rest einer Dicarbonsäure oder eines Dicarbonsäurederivates steht, E für einen Polyätherrest der Formel III

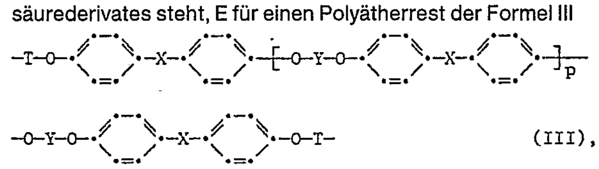

(III),

steht, worin p für eine Zahl von 1 bis 100 steht, T Phenylen, Naphthylen oder Phenanthrylen bedeutet, X für $-SO_2-$, -CO-, -SO-, -N=N-, $-CF_2-CF_2-$, 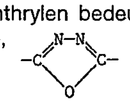,

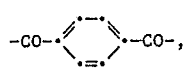, 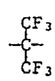, -CH=CH-, 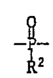 oder 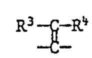

steht, worin $R^2$ ein $C_1$-$C_8$-Alkyl, $R^3$ und $R^4$ je ein Wasserstoff- oder Halogenatom bedeuten, und Y einen organischen Reste eines ein- oder zweikernigen, zweiwertigen Phenols bedeutet, sind in organischen Lösungsmitteln löslich und können als Ueberzugs- oder Beschichtungsmassen, als Pressmassen oder zur Herstellung von Filmen Anwendung finden.

EP 0 300 970 A1

## Beschreibung

### Vernetzbare Polyätheramide

Die vorliegende Erfindung betrifft vernetzbare, Imidylgruppen ungesättigter Carbonsäuren enthaltende Polyätheramide, Verfahren zu deren Herstellung und die aus den Polyätheramiden durch Vernetzung erhaltenen Produkte.

In der DE-OS 3 421 949 werden vernetzbare Harzmischungen offenbart, die Polyaryläther auf Basis von Hydrochinon oder 4,4'-Biphenol mit spezifisch ungesättigten, vernetzungsfähigen Endgruppen, wie Aethinylbenzoyl, Maleimidyl oder Nadimidyl, enthalten. Durch Vernetzung dieser endgruppenmodifizierten Polyaryläther, gegebenenfalls zusammen mit reaktiven Weichmachern, werden Polymere mit besserer Lösungsmittelbeständigkeit erhalten. Diese endgruppenmodifizierten Polyaryläther weisen aber den Nachteil auf, dass sie nur in spezifischen Lösungsmitteln, wie beispielsweise N-Methylpyrrolidon oder Sulfolan, löslich oder zum Teil löslich sind, so dass die Weiterverarbeitung der endgruppenmodifizierten Polyaryläther erschwert ist und auf bestimmte Verarbeitungsmethoden eingeschränkt ist.

Es wurde gefunden, dass Polyätheramide, die innerhalb der linearen Polymerkette vernetzbare Imidylgruppen ungesättigter Dicarbonsäuren enthalten, bessere Verarbeitungseigenschaften aufweisen, da diese in normalen organischen Lösungsmitteln löslich sind. Die Härtung dieser Polyätheramide führt zu vernetzten Polymeren, die ebenfalls eine hohe Lösungsmittelbeständigkeit aufweisen.

Gegenstand vorliegender Erfindung sind somit Polyätheramide mit einer spezifischen Viskosität von 0,25 bis 2,5, gemessen bei 30°C an einer 2%igen Lösung in Dimethylformamid, enthaltend, bezogen auf die Gesamtmenge der im Polyätheramid wiederkehrenden Strukturelemente, 100 bis 10 Mol% des wiederkehrenden Strukturelementes der Formel I

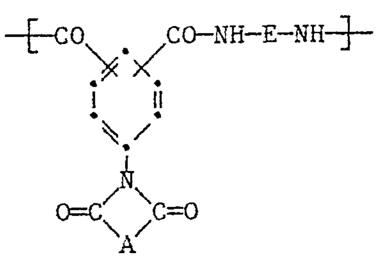

(I)

und 90 bis 0 Mol% des wiederkehrenden Strukturelementes der Formel II

$$-[CO-A_1-CO-NH-E-NH]- \quad (II),$$

worin A einen Rest der Formel 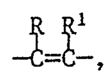, 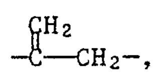, 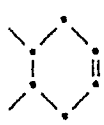, 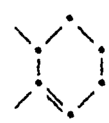,

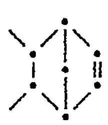 oder 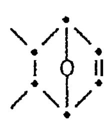 bedeutet,

wobei R und $R^1$ unabhängig voneinander je ein Wasserstoff-, Chlor-, Bromatom oder Methyl bedeuten, $A_1$ für einen aliphatischen, cycloaliphatischen, aromatischen oder heterocyclisch-aromatischen Rest einer Dicarbonsäure oder eines Dicarbonsäurederivates steht, E für einen Polyätherrest der Formel III

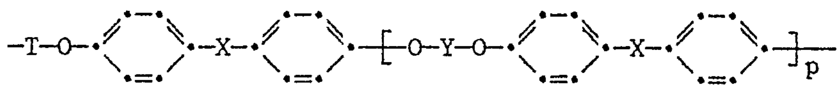

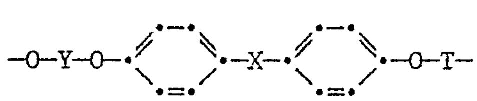

(III),

steht, worin p für eine Zahl von 1 bis 100 steht, T Phenylen, Naphthylen oder Phenanthrylen bedeutet, X für $-SO_2-$, $-CO-$, $-SO-$, $-N=N-$, $-CF_2-CF_2-$,

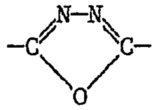 ,

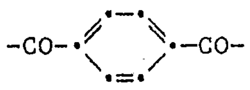, 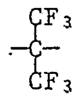, $-CH{=}CH-$, 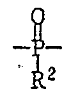 oder 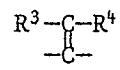 ;

steht, worin $R^2$ ein $C_1$-$C_8$-Alkyl, $R^3$ und $R^4$ je ein Wasserstoff- oder Halogenatom bedeuten, Y einen Rest der Formel IV oder V

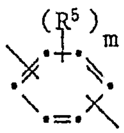 (IV) oder 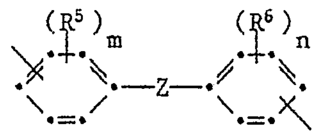 (V)

bedeutet, worin m und n je für Null oder eine Zahl von 1 bis 4 stehen, $R^5$ und $R^6$ gleich oder verschieden sind und je ein Halogenatom, unsubstituiertes oder phenylsubstituiertes $C_1$-$C_4$-Alkyl oder $C_1$-$C_4$-Alkoxy bedeuten, und, wenn n und m je für 1 oder 2 stehen, $R^5$ und $R^6$ auch je ein Allyl bedeuten und Z für eine direkte Bindung oder einen der folgenden Reste -O-, -SO-, $SO_2$-, -S-, -S-S-,

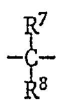 , 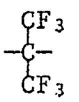 , $-O-(CH_2)_q-O-$ , 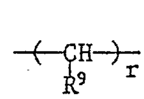 ,

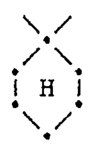 , 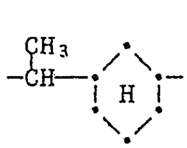 oder 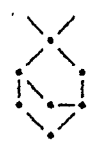

steht, worin $R^7$ und $R^8$ unabhängig voneinander je ein $C_1$-$C_4$-Alkyl oder Phenyl bedeuten, q für eine Zahl von1 bis 100 steht, und wenn $R^9$ ein Wasserstoffatom bedeutet, r für eine Zahl von1 bis 20 steht, oder, wenn $R^9$ ein unsubstituiertes oder durch $C_1$-$C_4$-Alkyl kernsubstituiertes Aryl oder Aralkyl mit 6 oder 10 C-Atomen im Ring oder Ringsystem und bis zu 10 C-Atomen im Alkylenrest bedeutet, r für die Zahl 1 steht.

Vorzugsweise enthalten die erfindungsgemässen Polyätheramide 100 bis 50 Mol-%, insbesondere 100 Mol-%, des wiederkehrenden Strukturelementes der Formel I und 50 bis 0 % des wiederkehrenden Strukturelementes der Formel II.

Die erfindungsgemässen Polyätheramide weisen ferner vorzugsweise eine spezifische Viskosität von 0,25 bis 1,0, insbesondere von 0,25 bis 0,6, auf.

Es ist allgemein bekannt, dass die spezifische Viskosität ein Mass für das Molekulargewicht von Polymeren darstellt. Die angegebenen Werte der spezifischen Viskosität von 0,25 bis 2,5 entsprechen einem durchschnittlichen Molekulargewichtsbereich von etwa 1000 bis 40 000.

Der Rest A im Strukturelement der Formel I bedeutet vorzugsweise einen Reste der Formel 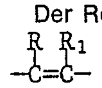 , worin R und $R_1$ unabhängig voneinander je ein -H, Chlor- oder Bromatom bedeuten. Insbesondere bedeuten bei den Substituenten R und $R_1$ je ein Wasserstoffatom.

Im Strukturelement der Formel I befinden sich die beiden Carbonylgruppen am aromatischen Ring vorzugsweise in meta-Stellung zur Imidylgruppe.

Der Reste $A_1$ im Strukturelement der Formel II bedeutet vorzugsweise einen Rest einer aliphatischen oder aromatischen Dicarbonsäure.

Im Strukturelement der Formel III steht p vorzugsweise für eine Zahl von 1 bis 10, insbesondere von1 bis 5, und bedeutet T vorzugsweise Phenylen oder Naphthylen, insbesondere Phenylen.

Der Rest X im Strukturelement der Formel III steht vorzugsweise für $-SO_2$-, -CO-, -SO-, $-CF_2$-$CF_2$-,

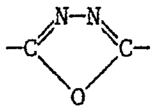,

-N=N-,

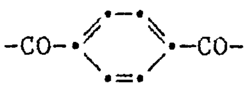 oder 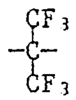,

insbesondere für $-SO_2-$ oder -CO-.

Der Rest Y im Strukturelement der Formel III besteht vorzugsweise aus einem Rest der Formel V, worin die freien Valenzen zum Rest Z in para-Stellung stehen, n und m je für Null, 1 oder 2 stehen, $R^5$ und $R^6$ je ein $C_1$-$C_4$-Alkyl bedeuten und Z für -O-, -S-, Isopropyliden, Hexafluorisopropyliden, $-O-(CH_2)_q-O-$ oder 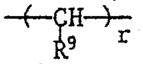 steht,

wobei q vorzugsweise für eine Zahl von 4 bis 20, $R^9$ für ein Wasserstoffatom und r vorzugsweise für eine Zahl von 1 bis 10 steht.

Insbesondere bedeutet Y einen Rest der Formel V, worin die freien Valenzen zum Rest Z in p-Stellung stehen, m und n Null bedeuten und Z für -O-, Isopropyliden, Hexamethylen, α,ω-Dioxohexamethylen oder α,ω-Dioxodecamethylen steht.

Die erfindungsgemässen Polyätheramide, enthaltend in bestimmten Mengen die wiederkehrenden Strukturelemente der Formeln I und II, können hergestellt werden, indem man ein Polyätherdiamin der Formel VI

$H_2N$-E-$NH_2$ (VI)

mit etwa äquimolaren Mengen einer Verbindung der Formel VII

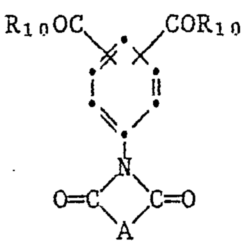

(VII)

oder mit einem Gemisch aus einer Verbindung der Formel VII und einer darin bis zu 90 Mol% enthaltenen Dicarbonsäure oder eines Dicarbonsäurederivates der Formel VIII,

$R_{10}OC$-$A_1$-$COR_{10}$ (VIII)

worin E, A und $A_1$ die gleiche Bedeutung wie in Formel I bzw. II haben und $R_{10}$ für ein Halogenatom, eine Hydroxylgruppe, eine unsubstituierte oder substituierte Phenoxygruppe oder eine Alkoxygruppe mit 1-18 C-Atomen steht, in einem polaren aprotischen Lösungsmittel polykondensiert, bis das erhaltene Polyätheramid eine spezifische Viskosität von 0,5 bis 2,5, gemessen bei 30°C an einer 2%igen Lösung in Dimethylformamid, aufweist.

Das erfindungsgemässe Verfahren führt man vorzugsweise unter Verwendung von äquimolaren Mengen von Verbindungen der Formel VI mit Verbindungen der Formel VII oder mit einem Gemisch aus Verbindungen der Formel VII und Verbindungen der Formel VIII durch. Man kann aber auch die Verbindung der Formel VI oder die der Formel VII bzw. das Gemisch aus einer Verbindung der Formel VII und einer Verbindung der Formel VIII in einem geringen äquimolaren Ueberschuss einsetzen, damit Polyätheramide mit nur $H_2N$- oder $R_{10}OC$-Endgruppen erhalten werden. Solche Endgruppen können dann gewünschtenfalls weiterumgesetzt werden, um reaktive, olefinisch ungesättigte Endgruppen oder nichtreaktive Endgruppen in das Polyätheramidmolekül einzuführen. Beispielsweise erhält man durch Umsetzung der erfindungsgemässen, Aminoendgruppen aufweisenden Polyätheramide mit olefinisch ungesättigten Dicarbonsäureanhydriden, wie zum Beispiel Maleinsäureanhydrid, Citraconsäureanhydrid oder Itaconsäureanhydrid, im Moleverhältnis von1:2 und anschliessende Cyclisierung der gebildeten Amidsäuregruppen zu den entsprechenden Imidgruppen Polyätheramide mit ungesättigten Imidylendgruppen. Die Aminoendgruppen aufweisenden Polyätheramide können auch mit 4-Maleinimidylbenzoechlorid umgesetzt werden, wobei der Cyclisierungsschritt entfällt. In analoger Weise kann man die erfindungsgemässen, Aminoendgruppen aufweisenden Polyätheramide mit aliphatischen oder aromatischen gesättigten Verbindungen, wie beispielsweise Benzoesäurechlorid oder α-Chlormethyltoluol, umsetzen, um Polyätheramide mit nichtreaktiven Endgruppen zu erhalten.

Desgleichen kann man die $R_{10}OC$-Endgruppen der erfindungsgemässen Polyätheramide modifizieren. Beispielsweise lassen sich die Säurechloridengruppen durch Umsetzen mit 4-Maleinimidylanilin oder Anilin in reaktive oder nichtreaktive Endgruppen überführen.

Die bevorzugten Polyätheramide werden hergestellt, indem man ein Polyätherdiamin der Formel VI mit einem Gemisch aus 100 bis 50 Mol% einer Verbindung der Formel VII und 50 bis 0 Mol% einer Verbindung der Formel VIII umsetzt.

Die besonders bevorzugten erfindungsgemässen Polyätheramide werden hergestellt, indem man ein Polyätherdiamin der Formel VI mit einer Verbindung der Formel VII polykondensiert.

Die Polykondensationsreaktion wird vorzugsweise bis zu einer spezifischen Viskosität von 0,25 bis 1,0, insbesondere 0,25 bis 0,6, der Polyätheramide durchgeführt.

Der bei der Polykondensation von Verbindungen der Formel VII und gegebenenfalls VIII, worin $R_{10}$ ein Halogenatom bedeutet, mit Verbindungen der Formel VI anfallende Halogenwasserstoff kann durch Neutralisation mit basischen Stoffen, wie Calciumhydroxid und Triäthylamin, oder durch Reaktion mit einer Epoxiverbindung, wie Aethylenoxid oder Propylenoxid, und durch Auswaschen mit geeigneten Lösungsmitteln, z.B. Wasser, entfernt werden.

Polare, aprotische Lösungsmittel, die beim Polykondensations-verfahren zur Herstellung der Polyätheramide eingesetzt werden, sind beispielsweise Dimethylsulfoxid, Dimethylacetamid, Diäthylacetamid, 1,3-Dimethyl-2-imidazolidinon, Tetramethylharnstoff, N-Methylcaprolactam, N-Methylpyrrolidon, Aceton, Dioxan, Essigester und Tetrahydrofuran.

Die Polyätherdiamine der Formel VI können nach dem in Journal of Polymer Science, Polymer Chemistry Edition, 12, (1974), Seite 565 ff, beschriebenen Verfahren hergestellt werden, indem man p+1 Mole eines zweiwertigen Phenols der Formel IX

HO-Y-OH (IX)

mit p+2 Mole einer Dihalogenverbindung der Formel X

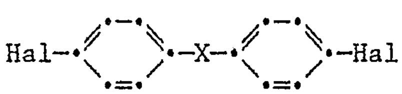 (X)

worin p, X und Y die gleiche Bedeutung wie in Formel III haben und Hal für ein Halogenatom steht, in einem aprotischen Lösungsmittel und in Gegenwart von Alkali zu einem Halogenendgruppen aufweisenden Polyäther umsetzt und anschliessend die endständigen Halogengruppen mit einem Aminophenol zu Verbindungen der Formel VI umsetzt.

Die Phenole der Formel IX sind bekannt und zum Teil im Handel erhältlich. Beispiele für solche Verbindungen sind Hydrochinon, Methylhydrochinon, 2,3-Dimethylhydrochinon, 2,5-Bis-[α-phenyläthyl]-hydrochinon, Resorcin, 2-Allylresorcin, 4,4′-Dihydroxydiphenyl, Bis-(4-hydroxyphenyl)-äther, 4,4′-Dihydroxy-2,6-dimethyldiphenyläther, Bis-(4-hydroxy-3-isobutylphenyl)-äther, Bis-(4-hydroxy-3-isopropylphenyl)-äther, Bis-(4-hydroxy-3-chlorphenyl)-äther, Bis-(4-hydroxy-3-fluorphenyl)-äther, Bis-(4-hydroxy-3-bromphenyl)-äther, 4,4′-Dihydroxy-3,6-dimethoxydiphenyläther, 4,4′-Dihydroxy-2,5-diäthoxydiphenyläther, Bis-(4-hydroxyphenyl)-sulfon, 5′-Chlor-4,4′-dihydroxydiphenylsulfon, Bis-(4hydroxyphenyl)-thioäther, Bisphenol A, 3,3′-Diallylbisphenol A, Tetraallylbisphenol A, 2,2-Bis-(3-methyl-4 hydroxyphenyl)-propan, 2,2-Bis-(2,3,5,6-tetramethyl-4-hydroxyphenyl)-propan, 2,2-Bis-(3-phenyl-4-hydroxyphenyl)-propan, 2,2-Bis-(3-isopropyl-4-hydroxyphenyl)-propan, 2,2-Bis-(2-isopropyl-4-hydroxyphenyl)-propan, 2,2-Bis-(3,5-dibrom-4-hydroxyphenyl)-propan, 2,2-Bis-(4-hydroxyphenyl)-pentan, 3,3-Bis-(4-hydroxyphenyl)-pentan, 2,2-Bis-(4-hydroxyphenyl)-1-phenylpropan und 2,2-Bis-(4-hydroxyphenyl)-1,1,1,3,3,3-hexafluorpropan.

Verbindungen der Formel IX, worin Y einen Rest der Formel $-O-(CH_2)_q-O-$ darstellt, sind beispielsweise aus dem Journal of Polymer Science; Polymer Physics Edition, Vol. 19, 951 ff (1981) bekannt. Stellt in der Formel IX Y einen Rest der Formel $-(\underset{R^9}{CH})_r-$ dar, so handelt es sich beispielsweise um Bisphenol F, 3,3′-Diallylbisphenol F, Bis-(4-hydroxyphenyl)-phenylmethan, Bis-(4-hydroxy-2,6-dimethyl-3-methoxyphenyl)-methan und α,ω-Di-(p-hydroxyphenyl)-alkane, wie 1,2-Bis-(4-hydroxyphenyl)-äthan oder 1,6-Bis-(4-hydroxyphenyl)-hexan. Die α,ω-Di-(p-hydroxyphenyl)-alkane können beispielsweise nach dem in "The Journal of the American Chemical Society", Band 62 (1940), Seite

413-415, offenbarten Verfahren hergestellt werden, indem man ein lineares Alkandicarbonsäuredichlorid mit 1 bis 98 C-Atomen in der linearen Alkylenkette im Molverhältnis von 1:2 mit einem Alkylphenyläther, z.B. Anisol oder Phenetol, unter HCl-Abspaltung zur entsprechenden Diketonverbindung kondensiert, danach die beiden Ketogruppen zu Methylengruppen hydriert und anschliessend die beiden Alkoxygruppen hydrolysiert.

Die Dihalogenverbindungen der Formel X stellen ebenfalls bekannte, zum Teil im Handel erhältlichen Verbindungen dar. Geeignete Verbindungen sind beispielsweise 4,4'-Dichlordiphenylsulfon, 4,4'-Difluordiphenylsulfon, 4,4'-Dichlordiphenylsulfoxid, 4,4'-Dichlorbenzophenon, 4,4'-Dichlorazobenzol, 1,2-Bis-(p-chlorphenyl)-tetrafluoräthan und 2,2-Bis-(p-fluor-phenyl)hexafluorpropan.

Die Verbindungen der Formel VII sind ebenfalls bekannt und können gemäss dem in der DE-OS 26 26 832 beschriebenen Verfahren hergestellt werden, indem man eine aromatische Aminodicarbonsäure oder deren Derivat der Formel XI

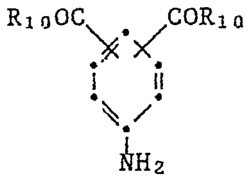

(XI)

mit einem Anhydrid der Formel XII

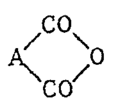

(XII),

worin $R_{10}$ und A die gleiche Bedeutung wie in Formel VII haben, umsetzt und die entstandenen Amiddicarbonsäure anschliessend zur Verbindung der Formel VII cyclisiert.

Die Dicarbonsäuren und definitionsgemässen Dicarbonsäurederivate der Formel VIII sind ebenfalls bekannt und zum Teil im Handel erhältlich. Als Beispiele solcher Verbindungen seien genannt: Malonsäure, Dimethylmalonsäure, Bernsteinsäure, Glutarsäure, Adipinsäure, Suberinsäure, Sebacinsäure und Dodecandicarbonsäure, 1,3-Cyclopentan-dicarbonsäure, Hexahydroisophthalsäure, Hexahydroterephthalsäure, Terephthalsäure, Isophthalsäure, 4,4'-Dicarboxydiphenyläthan, Naphthalin-2,6-dicarbonsäure, Thiophen-2,5-dicarbonsäure, Pyridin-2,3-dicarbonsäure, sowie die entsprechenden Dichloride und definitionsgemässen Diester.

Die erfindungsgemässen Polyätheramide können in der für Thermoplasten üblichen Weise eingesetzt und verarbeitet werden. Sie können beispielsweise als Press-, Ueberzugs- oder Beschichtungsmassen oder zur Herstellung von Filmen Verwendung finden. Vor dem Applizieren können den als Presspulver, Schmelzen oder Lösungen in einem üblichen organischen Lösungsmittel vorliegenden Polyätherharzen die üblichen Zusatzstoffe, wie beispielsweise Füllstoffe, Pigmente, Stabilisatoren oder Verstärkungsmittel, wie Kohlenstoff-, Bor- oder Glasfasern, zugegeben werden. Die erfindungsgemässen Polyätherharze können auch zusammen mit Duroplasten, wie beispielsweise Epoxidharze oder Bismaleinimide, oder mit anderen Thermoplasten, wie beispielsweise Polyester, Polyamide, Polyimide, Polyolefine oder Polyurethane, insbesondere mit den konventionellen Polyätherharzen, verarbeitet werden.

Vorzugsweise eignen sich die erfindungsgemässen Polyätheramide als Laminierharze für die Herstellung von Faserverbundsystemen, wobei man als Verstärkungsfasern die üblichen bei der Faserverstärkung von Werkstoffen verwendeten Fasern einsetzen kann. Diese können organische oder anorganische Fasern, Naturfasern oder Synthesefasern, wie Aramid-Fasern, sein und als Faserbündel oder Endlosfasern vorliegen. Beispielsweise verwendet man als Verstärkungsfasern Glas-, Asbest-, Bor-, Kohlenstoff- und Metallfasern, vorzugsweise Kohlenstoff- und Metallfasern. Solche Fasern und Gewebe daraus sind im Handel erhältlich.

Wie eingangs erwähnt, können die erfindungsgemässen Polyätheramide in an sich bekannter Weise vernetzt werden, zum Beispiel, thermisch durch Erhitzen auf etwa 50 bis 350°C oder chemisch.

Gegenstand vorliegender Erfindung sind somit auch die durch Vernetzung der erfindungsgemässen Polyätherharze erhaltenen Produkte.

Die thermische Vernetzung kann gegebenenfalls in Gegenwart von Radikalbildnern, z.B. anorganischen oder organischen Peroxiden, wie Kaliumperoxidsulfat oder Benzoylperoxid, Azoverbindungen, wie Azoisobutyronitril, organischen Hydroperoxiden, wie Cumolhydroperoxid oder tert.-Butylhydroperoxid, α-Halogenacetophenon, Benzoin oder dessen Aethern, Benzophenon, Benzpinakol, Benzilacetalen, Anthrachinonen, Arsinen, Phosphinen, Thioharnstoffen, Redox-Initiatorsystemen, anaerobischen Initiatorsystemen oder Metallsalzen vorgenommen werden.

Im Falle einer Vernetzung der erfindungsgemässen Polyätheramide mittels energiereichen Strahlen kann diese zum Beispiel mit Röntgenstrahlen, beschleunigten Elektronen, von einer $^{60}Co$-Quelle ausgesandten γ-Strahlen oder mit UV-Strahlen vorgenommen werden.

Durch die Vernetzung der erfindungsgemässen Polyätheramide erhält man in gebräuchlichen organischen Lösungsmitteln nicht mehr lösliche Polymere, die such ausserdem durch hohe Glasumwandlungstemperaturen sowie durch eine hohe Widerstandsfähigkeit gegenüber Wasser und Hitze auszeichnen.

Die in den folgenden Beispielen angegebenen spezifischen Viskositäten ($\eta_{sp.}$) werden, falls nicht anders angegeben wird, bei 30°C an einer 2%igen Lösung des Polymers in Dimethylformamid gemessen.

Beispiel A: Herstellung eines Polyätherdiamins auf Basis von Bisphenol A

In einem stets mit $N_2$ gut gespülten 750 ml-Sulfierkolben, versehen mit Rührer, Thermometer, Wasserabscheider, Kühler und $N_2$-Anschluss, werden 200 ml Dimethylsulfoxid, 200 ml Toluol, 50,22 g (0,22 Mol) Bisphenol A und 24,23 g (0,222 Mol) 4-Aminophenol vorgelegt und unter Rühren auf 60-70°C aufgeheizt. Bei einer Innentemperatur ($T_i$) von etwa 60°C werden zur hellbraunen klaren Lösung 52,8 g einer 50%igen wässerigen Natronlauge zugegeben. Bei etwa 70°C liegt eine dunkelbraune Lösung vor, Es wird weiter aufgeheizt und Wasser azeotrop abdestilliert und via Wasserabscheider abgetrennt. Nach 5,7 Stunden wird bei einer $T_i$ von 115°C nur noch ganz wenig und nach 6,9 Stunden bei einer $T_i$ von 115°C kein Wasser mehr abdestilliert. Das Toluol im Wasserabscheider wird abgetrennt und das restliche Toluol bei etwa 160°C abdestilliert. Nach Abkühlung auf 120-130°C werden zur Reaktionslösung 94,77 g (0,33 Mol) umkristallisiertes Dichlordiphenylsulfon portionenweise eingetragen, wobei eine leichte exotherme Reaktion eintritt. Dann wird das Reaktionsgemisch auf 155-160°C aufgeheizt und 2 Stunden bei dieser Temperatur gehalten. Anschliessend wird bei 80°C filtriert, mit wenig Dimethylsulfoxid nachgespült und das Polymer in 3 Liter Wasser, enthaltend 2 Gew.% Kalilauge und 1 Gew.% $K_2SO_3$ gefällt. Nach der Filtration wird der Niederschlag mit 1%iger $K_2SO_3$-Lösung, 2 Liter destilliertem Wasser und 2 Liter Isopropanol gewaschen und im Vakuum bei 60-70°C getrocknet.

Ausbeute: 143,1 g (98,8 % der Theorie)
Aminäquivalentgewicht = 666,5 (gemäss Titrationsmethode von S.R. Palit, Ind.Eng.Anal., 18 (1946)
Molekulargewicht (MG) nach Amin-Titration = 1333
theoretisches MG 1316

Beispiel B: Herstellung eines Polyätherdiamins auf Basis von 1,6-Bis-(p-hydroxyphenyl)-hexan

Nach der in Beispiel A beschriebenen Arbeitsweise wird ein Polyätherdiamin unter Verwendung folgender Ausgangssubstanzen hergestellt: 59,46 g (0,22 Mol) 1,6-Bis-(p-hydroxyphenyl)-hexan (umkristallisiert), 94,77 g (0,33 Mol) 4,4′-Dichlordiphenylsulfon, 24,23 g (0,222 Mol) 4-Amiophenol, 52,80 g (0,66 Mol) 50%ige wässrige Natronlauge, 200 ml Dimethylsulfoxid und 200 ml Toluol.

Ausbeute: 153,2 g (99,4 % der Theorie)
Aminäquivalentgewicht = 734,5
MG gemäss Amin-Titration = 1469

Beispiele C bis I: Herstellung von Polyätherdiaminen unter Verwendung verschiedener zweiwertiger Phenole

Analog der im Beispiel A beschriebenen Arbeitsweise werden die Polyätherdiamine C bis I unter Verwendung der folgenden Ausgangssubstanzen hergestellt.

| Polyätherdiamin | zweiwertiges Phenol | Dihalogenverbindung | Ausbeute (% d.Theorie) | Aminäquivalentgewicht |
|---|---|---|---|---|
| C | 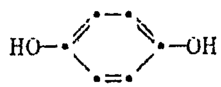 | 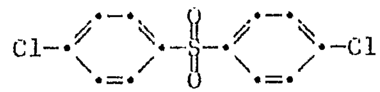 | 97,6 | 562,5 |
| D | 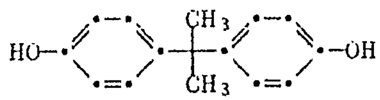 | 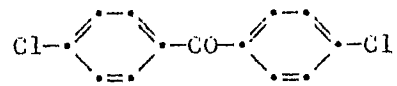 | 96,5 | 670 |
| E | 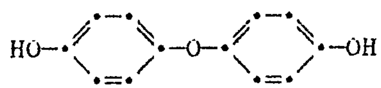 | 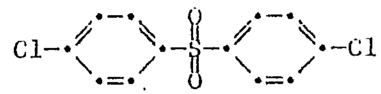 | 99,1 | 677,5 |
| F | 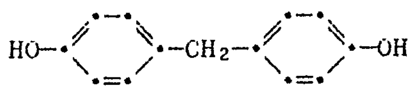 | 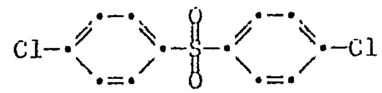 | 98,3 | 647,5 |
| G | 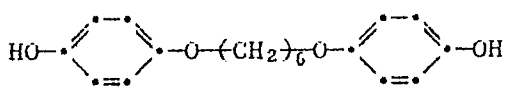 | 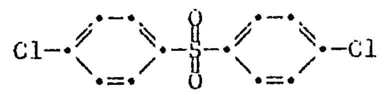 | 95,1 | 760 |
| H | 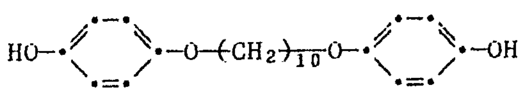 | 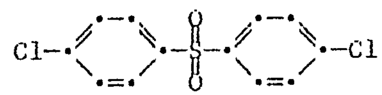 | 97,0 | 857,5 |
| I | 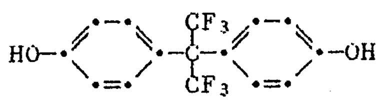 | 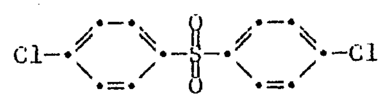 | 94,6 | 964 |

Beispiel 1:

a) Herstellung eines Polyätheramids:

Unter $N_2$-Atmosphäre werden 40,0 g (0,030 Mol) Polyätherdiamin gemäss Beispiel A in 335 ml Dimethylacetamid bei 23° C gelöst. Die entstehende dunkelbraune, klare Lösung wird auf 0-5° C abgekühlt und bei 2° C werden 5,96 g (0,020 Mol) 5-Maleinimidylisophthalsäuredichlorid dazugegeben. Die Reaktionslösung wird bei 0-5° C während 30 Minuten nachgerührt und anschliessend während 2 Stunden unter Rühren auf Raumtemperatur erwärmt. Dann werden 4,0 g (0,04 Mol) Triäthylamin bei 24° C dazugegeben, das als Triäthylamin-Hydrochlorid ausfällt. Es wird während einer weiteren Stunde bei 24° C nachgerührt und anschliessend bei dieser Temperatur filtriert und mit wenig Dimethylacetamid gewaschen. Die Klare Lösung des Polyätheramids wird in den Kolben zurückgegeben.

Zur Polyätheramidlösung werden 1,96 g (0,020 Mol) Maleinsäureanhydrid bei 24° C zugegeben, die Reaktionslösung auf 40 bis 50° C erwärmt und während 1 Stunde bei 44° C gehalten. Nach Abkühlung auf Raumtemperatur werden zur Reaktionslösung 5,1 g (0,05 Mol) Essigsäureanhydrid, 1,0 g (0,01 Mol) Triäthylamin und 0,128 g (0,0005 Mol) Nickelacetat zugegeben, die dann während 15,5 Stunden bei 24° C gerührt wird. Das Polymer wird in 2 Liter Wasser gefällt, filtriert, mit Wasser und Aethanol gewaschen und anschliessend bei 70-80° C getrocknet. Ausbeute: 42,6 g.

Das Polymer wird während 8 Stunden bei 200° C im Hochvakuum getrocknet. Es ist in Dimethylformamid und Dimethylacetamid löslich. C=C-Doppelbindungsgehalt (Mikrohydrierung): 1,0 mMol $H_2$/g, was einem MG von 4000 entspricht (Theorie 4507).

MG durch Gelpermeationschromatographie: Mn = 3770, Mw = 7420

Spezifische Viskosität $\eta_{sp} = 0{,}338$

b) Herstellung eines Formkörpers:

6,6 g des oben erhaltenen Polyätheramids werden in Form von zwei bei Raumtemperatur vorgepressten Tabletten in eine auf 220° C vorgeheizte Pressform gegeben. Innerhalb von 3 Minuten wird der Druck auf 20,0 bis $24{,}5 \cdot 10^5$ Pa erhöht. Nach 5 Minuten wird die Form weiter auf 280° C aufgeheizt und 1 Stunde bei dieser Temperatur (Druck $24{,}5 \cdot 10^5$ Pa) gehalten. Anschliessend wird unter Druck auf kleiner als 150° C abgekühlt und entformt.

Glasumwandlungstemperatur = 228° C (TMA-Gerät, 10° C/Minute, DuPont)

Schlagbiegefestigkeit nach DIN 51230 = 17,2 kJ/$m^2$ (Dynstat-Gerät).

c) Herstellung eines Laminates:

Ein Kohlenstoffasergewebe (G 814 NT der Firma Brochier S.A.) wird mit einer 27%igen Lösung des nach Beispiel 1a hergestellten Polyätheramids in Dimethylformamid durch zweimaliges Tauchen darin imprägniert. Nach jeder Imprägnierung werden die Kohlenstoffasergewebe während 10 Minuten bei Raumtemperatur und 10 Minuten bei 180° C im Umluftofen getrocknet. Am Schluss wird nochmals 10 Minuten bei 230° C getrocknet. 8 Lagen des so hergestellten Prepregs mit den Abmessungen 13,5 x 14,5 cm werden mit einer Kapton®-Folie (Poly-(diphenyloxidpyromellitimid) der Fa. DuPont) umwickelt und das Ganze, oben und unten mit einer Kupferfolie abgedeckt, bei 280° C in eine vorgeheizte Form gelegt und bei 280° C verpresst, wobei innerhalb von 60 Sekunden ein Druck von $91{,}2 \cdot 10^5$ Pa aufgepresst wird. Diese Pressbedingungen werden 1 Stunden beibehalten. Anschliessend wird die Presse unter Druck auf unterhalb von 150° C abgekühlt und der Pressling aus der Presse entfernt.

Glasumwandlungstemperatur = 253/247° C (TMA-Gerät, 10° C/Minute, Du Pont).

Beispiel 2:

a) Herstellung eines Polyätheramids:

Nach der in Beispiel 1a angegebenen Arbeitsweise wird ein Polyätheramid unter Verwendung folgender Verbindungen hergestellt:

44,07 g (0,03 Mol) Polyätherdiamin gemäss Beispiel B

5,96 g (0,02 Mol) 5-Maleinimidylisophthalsäuredichlorid 335 ml Dimethylacetamid

4,0 g (0,04 Mol) Triäthylamin.

Anschliessend wird das erhaltene Polyätheramid mit 1,96 g (0,02 Mol) Maleinsäureanhydrid umgesetzt und die Amidsäuregruppen werden mit 5,10 g (0,050 Mol) Essigsäureanhydrid 1,0 g (0,01 Mol) Triäthylamin und 0,128 g (0,0005 Mol) Nickelacetat imidisiert.

Ausbeute: 47,2 g

Das Produkt wird 8 Stunden bei 200° C im Hochvakuum getrocknet. Es ist in Dimethylformamid und

Dimethylacetamid löslich.
C=C-Doppelbindungsgehalt (Mikrohydrierung): 0,9 mMol $H_2$/g, was einem Molekulargewicht von 4444 entspricht (Theorie 4591).
MG durch Gelpermeationschromatographie: Mn 4390, Mw 11640
Spezifische Viskosität $\eta_{sp}$ = 0,549.

b) Herstellung eines Formkörpers:

Die Formkörperherstellung wird in analoger Weise vorgenommen wie unter Beispiel 1b beschrieben mit dem Unterschied, dass eine Presstemperatur von 250°C angewendet wird. Der erhaltene Formkörper weist folgende Eigenschaften auf:
Glasumwandlungstemperatur = 153°C (TMA-Gerät)
Schlagbiegefestigkeit = 23,5 kJ/m².

Beispiel 3:

Nach der im Beispiel 1a beschriebenen Arbeitsweise werden Polyätheramide C bis I hergestellt, indem man die Polyätherdiamine C bis I jeweils mit 5-Maleinimidylisophthalsäuredichlorid im Molverhältnis von 3:2 umsetzt und anschliessend die $NH_2$-Endgruppen durch Umsetzung mit Maleinsäureanhydrid in Maleinimidylgruppen umwandelt. Die Eigenschaften der erhaltenen Polyätheramide sind in der folgenden Tabelle angegeben.

| Poly-äther-amid | Tg (TMA) [°C] | Mol.Gew. [1)] | Mn [2)] | Mw [2)] | Tg (DMA) [°C] | Schlagbiegefestigkeit DIN 51230 [kJ/m²] |
|---|---|---|---|---|---|---|
| C | 200 | 4440 | 2510 | 3990 | 246 | 6,8 |
| D | 156 | 3330 | 2910 | 5730 | 162 | 11,1 |
| E | 167 | 3300 | 2064 | 3768 | 209 | 15,6 |
| F | 195 | 4400 | 1671 | 2801 | 199 | 9,5 |
| G | 145 | 4000 | 2948 | 5052 | 166 | 13,9 |
| H | 96 | 4200 | 3540 | 7770 | 105 | 29,5 |
| I | 172 | 4400 | 2720 | 5160 | 209 | 4,6 |

1) berechnet aufgrund des C=C-Gehaltes (Mikrohydrierung) 2) GPC

3) Dynamic Mechanical Analysis, 10°C/Min. (Du Pont)

Beispiel 4:

a) Herstellung eines Polyätheamids:

Nach der im Beispiel 1a angegebenen Arbeitsweise wird ein Polyätheramid unter Verwendung folgender Verbindungen hergestellt:
32,20 g (0,06 Mol) Polyätherdiamin gemäss Beispiel A,
11,92 g (0,04 Mol) 5-Maleinimidylisophthalsäuredichlorid,
500 ml Dimethylacetamid und
8,0 g (0,08 Mol) Triäthylamin.
Anschliessend wird das erhaltene Polyätheramid mit
5,62 g (0,04 Mol) Benzoylchlorid und
4,0 g (0,04 Mol) Triäthylamin
umgesetzt).

Das Produkt wird im Vakuum bei 80-90°C getrocknet. Es ist in Dimethylformamid und Dimethylacetamid löslich.
Ausbeute: 93,3 g (96,9 % d.Theorie).
C=C-Doppelbindungsgehalt (Mikrohydrierung): 0,6 mMol $H_2$/g, was einem Molekulargewicht von 3300 entspricht.
MG durch Gelpermeationschromatographie: Mn 1900, Mw 3530.

b) Herstellung eines Formkörpers:

Die Formkörperherstellung wird in analoger Weise vorgenommen wie unter Beispiel 1b beschrieben. Der erhaltene Formkörper weist folgende Eigenschaften auf:
Glasumwandlungstemperatur: 177°C (DMA)
Schlagbiegefestigkeit: 3,4 kJ/$m^2$.

Beispiel 5:

a) Herstellung eines Polyätheramids:

Unter $N_2$-Atmosphäre werden 440,7 g (0,30 Mol) Polyätherdiamin gemäss Beispiel A in 3600 ml Dimethylacetamid gelöst. Die entstehende rotbraune, klare Lösung wird auf 0-5°C abgekühlt. Bei 0°C werden 59,62 g (0,20 Mol) 5-Maleinimidylisophthalsäuredichlorid in 4 Portionen innerhalb von 20 Minuten zugegeben. Durch leichtes Kühlen wird die Temperatur bei 0-5°C gehalten. Die Reaktionslösung wird 1 Stunde bei 0-5°C nachgerührt. Anschliessend werden 47,12 g (0,20 Mol) 5-Maleinimidylbenzoylchlorid in 4 Portionen innerhalb von 20 Minuten zugegeben. Die Reaktionslösung wird 1 Stunde nachgerührt, wobei man die Temperatur auf 20-25°C ansteigen lässt. Dann werden 60,7 g (0,60 Mol) Triäthylamin bei 20°C zugegeben, welche rasch als Hydrochlorid ausfällt. Es wird während einer weiteren Stunde bei 25°C nachgerührt und anschliessend bei dieser Temperatur filtriert und mit wenig Dimethylacetamid nachgewaschen. Das Polymer wird viermal in 2,5 Liter Wasser gefällt, filtriert, mit Wasser und Aethanol gewaschen und anschliessend bei 80-90°C im Vakuum getrocknet.
Ausbeute: 523,0 g (99,5 % d.Theorie).
Das Polymer ist in Dimethylformamid und Dimethylacetamid löslich.
C=C-Doppelbindungsgehalt (Mikrohydrierung): 1,0 mMol $H_2$/g, was einem MG von 4000 entspricht.
MG durch Gelpermeationschromatographie: Mn 2700, Mw 5350.
Spezifische Viskosität $\eta_{sp}$ = 0,311 (2,0 %, DMF, 25°C).

b) Herstellung eines Formkörpers:

Die Formkörperherstellung wird in analoger Weise vorgenommen wie unter Beispiel 1b beschrieben. Der erhaltene Formkörper weist folgende Eigenschaften auf:
Glasumwandlungstemperatur: 207°C (DMA)
Schlagbiegefestigkeit: 18,6 kJ/$m^2$.

**Patentansprüche**

1. Polyätheramide mit einer spezifischen Viskosität von 0,25 bis 2,5, gemessen bei 30°C an einer 2%igen Lösung in Dimethylformamid, enthaltend, bezogen auf die Gesamtmenge der im Polyätheramid wiederkehrenden Strukturelemente, 100 bis 10 Mol% des wiederkehrenden Strukturelementes der Formel I

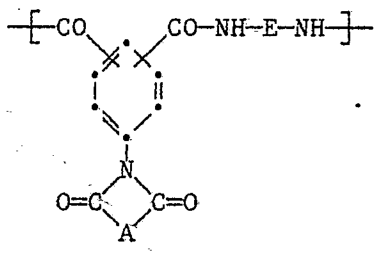

(I)

und 90 bis 0 Mol% des wiederkehrenden Strukturelementes der Formel II

$-[CO-A_1-CO-NH-E-NH]-$ (II),

worin A einen Rest der Formel 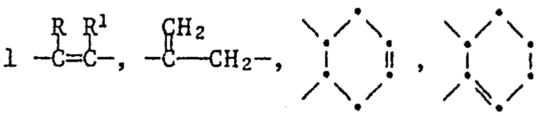 ,

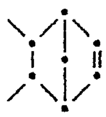 oder 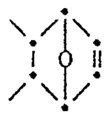 bedeutet,

wobei R und $R^1$ unabhängig voneinander je ein Wasserstoff-, Chlor-, Bromatom oder Methyl bedeuten, $A_1$ für einen aliphatischen, cycloaliphatischen, aromatischen oder heterocyclisch-aromatischen Rest einer Dicarbonsäure oder eines Dicarbonsäurederivates steht, E für einen Polyätherrest der Formel III

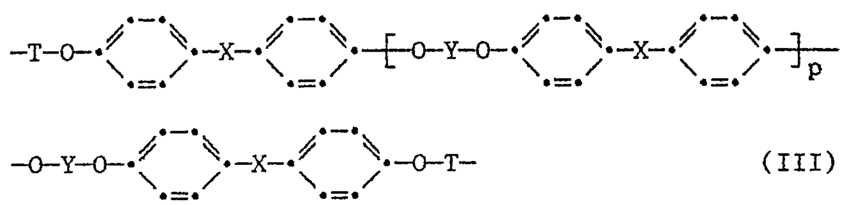

(III),

steht, worin p für eine Zahl von 1 bis 100 steht, T Phenylen, Naphthylen oder Phenanthrylen bedeutet, X für

$-SO_2-$, $-CO-$, $-SO-$, $-N{=}N-$, $-CF_2-CF_2-$, 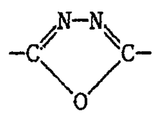 ,

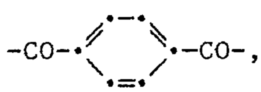 , 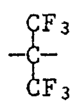 , $-CH{=}CH-$, 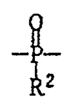 oder 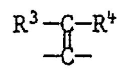 steht,

worin $R^2$ ein $C_1$-$C_8$-Alkyl, $R^3$ und $R^4$ je ein Wasserstoff- oder Halogenatom bedeuten, Y einen Rest der Formel IV oder V

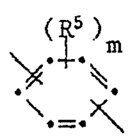 (IV) oder 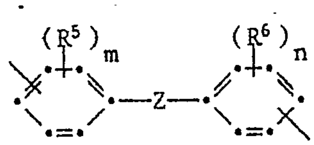 (V)

bedeutet, worin m und n je für Null oder eine Zahl von 1 bis 4 stehen, $R^5$ und $R^6$ gleich oder verschieden sind und je ein Halogenatom, unsubstituiertes oder phenylsubstituiertes $C_1$-$C_4$-Alkyl oder $C_1$-$C_4$-Alkoxy bedeuten, und, wenn n und m je für 1 oder 2 stehen, $R^5$ und $R^6$ auch je ein Allyl bedeuten und Z für eine direkte Bindung oder einen der folgenden Reste -O-, -SO-, $SO_2$-, -S-, -S-S-,

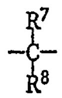 , 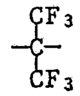 , $-O-(CH_2)_q-O-$ , 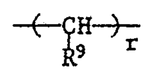 ,

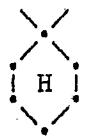 , 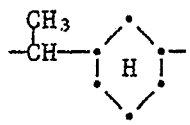 oder 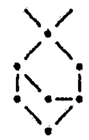

steht, worin $R^7$ und $R^8$ unabhängig voneinander je ein $C_1$-$C_4$-Alkyl oder Phenyl bedeuten, q für eine Zahl von 1 bis 100 steht, und wenn $R^9$ ein Wasserstoffatom bedeutet, r für eine Zahl von 1 bis 20 steht, oder, wenn $R^9$ ein unsubstituiertes oder durch $C_1$-$C_4$-Alkyl kernsubstituiertes Aryl oder Aralkyl mit 6 oder 10 C-Atomen im Ring oder Ringsystem und bis zu 10 C-Atomen im Alkylenrest bedeutet, r für die Zahl 1 steht.

2. Polyätheramide gemäss Anspruch 1, welche 100 bis 50 Mol% des wiederkehrenden Strukturelementes der Formel I und 50 bis 0 Mol% des wiederkehrenden Strukturelementes der Formel II enthalten.

3. Polyätheramide gemäss Anspruch 1, welche 100 Mol% des wiederkehrenden Strukturelementes der Formel I enthalten.

4. Polyätheramide gemäss Anspruch 1, worin der Rest A im Strukturelement der Formel I einen Rest der Formel

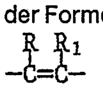 bedeutet, worin R und $R_1$ unabhängig voneinander je ein -H, Chlor, oder Bromatom bedeuten.

5. Polyätheramide gemäss Anspruch 1, worin $A_1$ in Formel II einen Rest einer aliphatischen oder aromatischen Dicarbonsäure bedeutet.

6. Polyätheramide gemäss Anspruch 1, worin in Formel III p für eine Zahl von 1 bis 10 steht und T Phenylen oder Naphthylen bedeutet.

7. Polyätheramide gemäss Anspruch 1, worin in Formel III p für eine Zahl von 1 bis 5 steht.

8. Polyätheramide gemäss Anspruch 1, worin X im Strukturelement der Formel III für

$-SO_2-$, $-CO-$, $-SO-$, $-CF_2-CF_2-$, 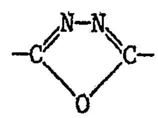 , $-N{=}N-$,

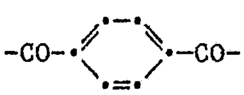 oder 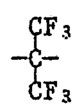 steht.

9. Polyätheramide gemäss Anspruch 1, worin Y im Strukturelement der Formel III aus einem Rest der Formel V besteht, worin die freien Valenzen zum Rest Z in para-Stellung stehen, n und m je für Null, 1 oder 2 stehen, $R^5$ und $R^6$ je ein $C_1$-$C_4$-Alkyl bedeuten und Z für -O-, -S-, Isopropyliden, Hexafluorisopropyliden, $-O-(CH_2)_q-O-$ oder 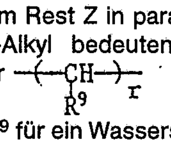
steht, wobei q für eine Zahl von 4 bis 20 steht, $R^9$ für ein Wasserstoffatom und r für eine Zahl von 1 bis 10 steht.

10. Polyätheramide gemäss Anspruch 1, worin Y im Strukturelement der Formel III aus einem Rest der Formel V besteht, worin die freien Valenzen zum Rest Z in p-Stellung stehen, m und n Null bedeuten und Z für -O-, Isopropyliden, Hexamethylen, α,ω-Dioxohexamethylen oder α,ω-Dioxodecamethylen steht.

11. Verfahren zur Herstellung von Polyätheramiden gemäss Anspruch 1, dadurch gekennzeichnet, dass man ein Polyätherdiamin der Formel VI

$H_2N-E-NH_2$ (VI)

mit etwa äquimolaren Mengen einer Verbindung der Formel VII

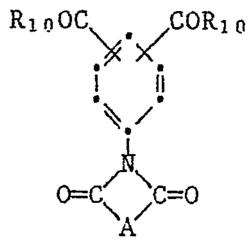

(VII)

oder mit einem Gemisch aus einer Verbindung der Formel VII und einer darin bis zu 90 Mol% enthaltenen Dicarbonsäure oder eines Dicarbonsäurederivates der Formel VIII

$R_{10}OC\text{-}A_1\text{-}COR_{10}$ (VIII),

worin E, A und $A_1$ die gleiche Bedeutung wie in Formel I bzw. II haben und $R_{10}$ für ein Halogenatom, eine Hydroxygruppe, eine unsubstituierte oder substituierte Phenoxygruppe oder eine Alkoxygruppe mit 1-18 C-Atomen steht, in einem polaren aprotischen Lösungsmittel polykondensiert, bis das erhaltene Polyätheramid eine spezifische Viskosität von 0,5 bis 2,5, gemessen bei 30° C an einer 2%igen Lösung in Dimethylformamid, aufweist.

12. Die durch Vernetzung der Polyätheramide gemäss Anspruch 1 erhaltenen Produkte.

**Patentansprüche für den folgenden Vertragsstaat: ES**

1. Verfahren zur Herstellung von Polyätheramiden mit einer spezifischen Viskosität von 0,25 bis 2,5, gemessen bei 30° C an einer 2%igen Lösung in Dimethylformamid, enthaltend, bezogen auf die Gesamtmenge der im Polyätheramid wiederkehrenden Strukturelemente, 100 bis 10 Mol% des wiederkehrenden Strukturelementes der Formel I

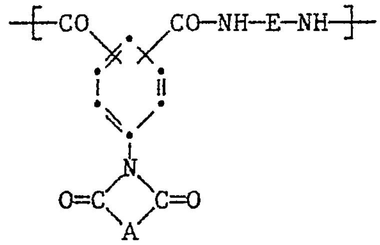

(I)

und 90 bis 0 Mol% des wiederkehrenden Strukturelementes der Formel II

$$-\!\!\left[CO-A_1-CO-NH-E-NH\right]\!\!- \quad (II),$$

worin A einen Rest der Formel 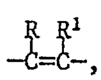, 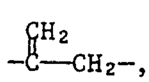, 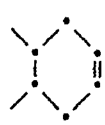, 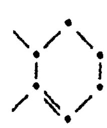,

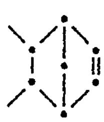 oder 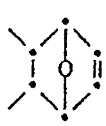 bedeutet,

wobei R und $R^1$ unabhängig voneinander je ein Wasserstoff-, Chlor-, Bromatom oder Methyl bedeuten, $A_1$ für einen aliphatischen, cycloaliphatischen, aromatischen oder heterocyclisch-aromatischen Rest einer Dicarbonsäure oder eines Dicarbonsäurederivates steht, E für einen Polyätherrest der Formel III

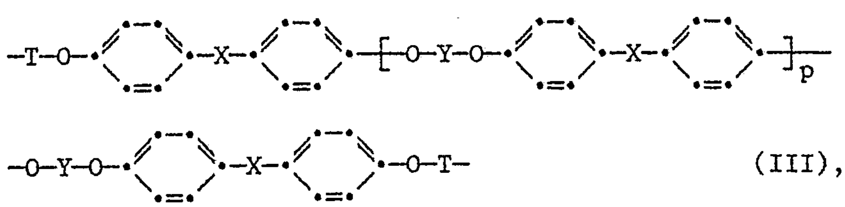

(III),

steht, worin p für eine Zahl von 1 bis 100 steht, T Phenylen, Naphthylen oder Phenanthrylen bedeutet, X für $-SO_2-$, -CO-, -SO-, -N=N-, $-CF_2-CF_2-$,

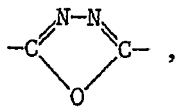 ,

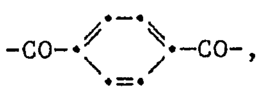 , 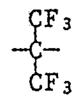 , -CH=CH-, 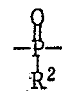 oder 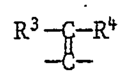

steht, worin $R^2$ ein $C_1$-$C_8$-Alkyl, $R^3$ und $R^4$ je ein Wasserstoff- oder Halogenatom bedeuten, Y einen Rest der Formel IV oder V

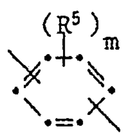 (IV) oder 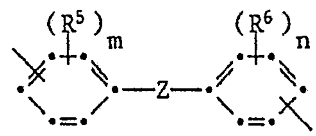 (V)

bedeutet, worin m und n je für Null oder eine Zahl von 1 bis 4 stehen, $R^5$ und $R^6$ gleich oder verschieden sind und je ein Halogenatom, unsubstituiertes oder phenylsubstituiertes $C_1$-$C_4$-Alkyl oder $C_1$-$C_4$-Alkoxy bedeuten, und, wenn n und m je für 1 oder 2 stehen, $R^5$ und $R^6$ auch je ein Allyl bedeuten und Z für eine direkte Bindung oder einen der folgenden Reste -O-, -SO-, $SO_2$-, -S-, -S-S-,

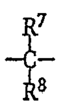 , 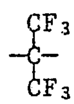 , $-O-(CH_2)_q-O-$ , 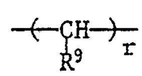 ,

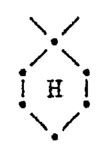 , 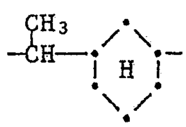 oder 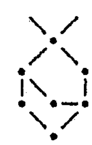

steht, worin $R^7$ und $R^8$ unabhängig voneinander je ein $C_1$-$C_4$-Alkyl oder Phenyl bedeuten, q für eine Zahl von 1 bis 100 steht, und wenn $R^9$ ein Wasserstoffatom bedeutet, r für eine Zahl von 1 bis 20 steht, oder, wenn $R^9$ ein unsubstituiertes oder durch $C_1$-$C_4$-Alkyl kernsubstituiertes Aryl oder Aralkyl mit 6 oder 10 C-Atomen im Ring oder Ringsystem und bis zu 10 C-Atomen im Alkylenrest bedeutet, r für die Zahl 1 steht, dadurch gekennzeichnet, dass man ein Polyätherdiamin der Formel VI

$H_2N-E-NH_2$ (VI)

mit etwa äquimolaren Mengen einer Verbindung der Formel VII

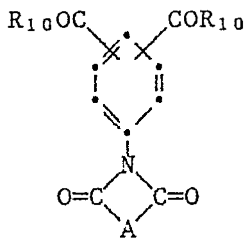

(VII)

oder mit einem Gemisch aus einer Verbindung der Formel VII und einer darin bis zu 90 Mol% enthaltenen Dicarbonsäure oder eines Dicarbonsäurederivates der Formel VIII

$R_{10}OC-A_1-COR_{10}$ (VIII),

worin E, A und $A_1$ die gleiche Bedeutung wie in Formel I bzw. II haben und $R_{10}$ für ein Halogenatom, eine Hydroxylgruppe, eine unsubstituierte oder substituierte Phenoxygruppe oder eine Alkoxygruppe mit 1-18 C-Atomen steht, in einem polaren aprotischen Lösungsmittel polykondensiert, bis das erhaltene Polyätheramid eine spezifische Viskosität von 0,5 bis 2,5, gemessen bei 30° C an einer 2%igen Lösung in Dimethylformamid, aufweist.

2. Verfahren gemäss Anspruch 1, dadurch gekennzeichnet, dass man ein Polyätherdiamin der Formel VI mit einem Gemisch aus 100 bis 50 Mol% einer Verbindung der Formel VII und 50 bis 0 Mol% einer Verbindung der Formel VIII umsetzt.

3. Verfahren gemäss Anspruch 1, dadurch gekennzeichnet, dass man ein Polyätherdiamin der Formel VI mit einer Verbindung der Formel VII polykondensiert.

Europäisches Patentamt

# EUROPÄISCHER RECHERCHENBERICHT

Nummer der Anmeldung

EP 88 81 0486

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| | Keine Entgegenhaltungen<br>----- | | C 08 G 65/40 |
| | | | RECHERCHIERTE SACHGEBIETE (Int. Cl.4) |
| | | | C 08 G |

Der vorliegende Recherchenbericht wurde für alle Patentansprüche erstellt

| Recherchenort | Abschlußdatum der Recherche | Prüfer |
|---|---|---|
| DEN HAAG | 26-10-1988 | LEROY ALAIN |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)